# EUROPEAN PATENT SPECIFICATION

(11) **EP 0 837 247 B1**
(45) Date of publication and mention of the grant of the patent: **28.05.2003**
(21) Application number: 97308361.1
(22) Date of filing: 21.10.1997
(51) Int. Cl.: F04D 29/66, F04D 29/54, F01D 5/14

(54) **Stator assembly for the flow path of a gas turbine engine**
Leitgitter für den Durchflussweg einer Gasturbine
Ensemble stator pour le passage d'écoulement d'une turbine à gaz

(30) Priority: 21.10.1996 US 28907 P; 23.12.1996 US 780072; 23.12.1996 US 780075
(43) Date of publication of application: 22.04.1998
(73) Proprietor: UNITED TECHNOLOGIES CORPORATION, Hartford, CT 06101 (US)
(72) Inventor: Hanson, Donald B., Chester, Connecticut 06412 (US)
(74) Representative: Leckey, David Herbert

(56) References cited:
- US-A- 3 477 231
- US-A- 3 652 184
- US-A- 4 116 584
- US-A- 4 155 221
- US-A- 4 175 640
- US-A- 4 817 756
- US-A- 5 203 164

## Description

The present invention relates generally to gas turbine engines having a working medium flow path, a rotor assembly which includes arrays of rotor blades and a stator assembly which includes arrays of stator vanes, and more particularly to a stator assembly of the type having an annular channel in the working medium flow path extending axially from a location between the array of rotor blades and the array of stator vanes for reducing noise in the working medium flow path.

A gas turbine engine, such as a gas turbine engine for an aircraft, includes a fan section, a compression section, a combustion section, and a turbine section. An annular flow path for working medium flow gases extends axially through the sections of the engine. The engine has a rotor assembly which includes arrays of rotor blades and a stator assembly which includes arrays of stator vanes.

The rotor assembly in the fan section has an axis of rotation and includes arrays of rotor blades angled with respect to the approaching flow. The blades are rotatable about the axis of rotation of the engine. An array of stator vanes is disposed downstream of the rotor array to receive and redirect the flow. The stator assembly includes an outer wall and an inner wall which extend circumferentially with respect to the flow path to bound the flow path for working medium gases. As the working medium gases are flowed along the flow path, the gases are pressurized in the fan and compression section causing the temperature and the pressure of the gases to rise. The hot, pressurized gases are burned with fuel in the combustion section to add energy to the gases. These gases are expanded through the turbine section to produce useful work for pressurizing the gases in the fan and compression sections and thrust for propelling the gas turbine engine.

The rotor assembly extends axially through the engine to transfer the work of pressurization from the turbine section to the fan section. As the blades in the fan section are rotated about the axis of rotation, the blades do work on the gases to increase the pressure of the gases. The rotor blades increase the velocity of the gases and deflect the flow of gases from a general axial direction to the direction of rotation. The gases are then flowed past the rotor blades to the stator vanes which redirect the flow of gases to increase the axial component of velocity of the flow. Thus in the stators, the velocity of the gases decreases while the static pressure increases. By reorienting the flow, the stator vanes increase the recovery of the flow energy of the gases into thrust.

The flow of these gases through the engine and the passage of the blades through the gases are accompanied by the generation of acoustic energy or noise. In addition, the interaction of the stator components and other rotor components with the gases generates acoustic vibrations and noise.

Noise is a source of concern to the manufacturers of aircraft and aircraft engines. The manufacturers are especially concerned with the adverse effect of excessive levels of noise on passengers, aircraft personnel and residents in close proximity to airports. As a result of noise restrictions placed upon the use of aircraft in certain areas and at certain times, a need has existed and continues to exist for quieter aircraft engines.

The principal sources of noise in a jet engine are: jet or exhaust noise, core noise, and fan noise. Jet noise results from mixing of the high-velocity exhaust stream with the ambient air. A considerable amount of turbulence is generated when these two streams mix at different velocities, and hence the noise. With the introduction of the turbofan engine, there are two exhaust streams, therefore two sources of external noise. One source is the turbulent mixing of the fan exhaust stream with the ambient air. The other source is the turbulent mixing of the core exhaust stream with the fan exhaust stream and the ambient air.

Core noise consists of compressor noise, combustion noise and turbine noise. Compressor and turbine noise are caused by unsteady blade forces and fluid stresses when fluids are compressed or used to drive the turbines. Combustion noise results from the turbulence generated by the burning of fuel in the combustion chamber.

Fan noise is one of the major, if not the predominant, sources of noise in a high-bypass ratio turbofan engine. Separate and distinct mechanisms contribute to fan noise which can be categorized into discrete tone noise and broadband noise. Discrete tone noise is a noise of a specific frequency from wakes of rotor blades and has a distinct signal or sound that can be heard above the background noises. Wakes from rotor blades, sweeping past stator vanes, produce pressure fluctuations on the vane surfaces; fluctuating aerodynamic pressure on the surfaces of airfoils, either stationary vanes or rotating blades, produces forces which in turn generate noise. Thus, the wake turbulent flow has to impact the radial airfoil surfaces to generate noise. Propagation of this noise from the engine relates to the number of vanes and blades of the engine, the geometry of walls bounding the flow path for working medium gases, velocity of the gases and rotor speed.

Broadband noise, rather than being at a discrete frequency, is distributed over a range of frequencies, such as the noise produced by the work of the engine on the gases which are flowed through the engine to produce thrust. Broadband noise is essentially the noise generated from the turbulence in the working medium gases as they pass across the rotor blade and stator vane surfaces. The effect is greater at the tip region of the rotor blade.

It is difficult to suppress fan noise because of the interdependence of the mechanisms which contribute to this noise and the basic aerodynamic operation of the fan. Much work has been done on designing turbofan and turbojet aircraft engines to reduce noise levels. The prior art contains many instances of structure adapted specifically for retrofit or original fit on a turbine engine to suppress engine noise. Typically, the noise suppression structure consists of sound attenuating liners applied to the nose cowl, the nose dome and the fan flow path components of the engine. In typical constructions the sound absorption material is used to line the inlet duct and nozzle of a turbojet or turbofan engine in order to suppress the noise generated within the flow path. However, significant aerodynamic losses result from the addition of enough noise suppression structure to provide acceptable levels of tonal and broadband noise.

One approach to reducing noise levels is discussed in US-A-3,820,628 in which boundary layer control is used in a fan to reduce the noise generated in the fan flow path by structures such as flow splitters, inlet guide vanes, fan blading coming into contact with the airstream. The strata of boundary layer in the fan flow path adjacent the structures, whether inlet guide vanes, outlet guide vanes, or flow splitters, communicate with openings formed in the structures. The structures are designed to contain sound suppression means or material. The working medium gases are flowed through the sound suppression means by a suction pump so as to remove the boundary layer and thereby reduce the attendant wakes.

Another approach to reducing noise levels is discussed in US-A-4,155,221 which discloses a device for reducing stater source noise from the fan stage of a turbofan type gas turbine engine.

This above art notwithstanding, scientists and engineers are still seeking to reduce the level of noise for a given aerodynamic loss in a gas turbine engine.

This invention is in part predicated on the recognition that the contribution to thrust of flow discharged from the tip region of rotor blades in a compression section is less than the contribution from an equivalent amount of flow from other locations of the rotor blade and that noise reduction means associated with the outermost twenty percent (20%) of the flow path provides a greater level of noise reduction for such flow as compared with noise reduction means associated with other locations of the flow path for a given aerodynamic loss connected with such structure.

From a first broad aspect, therefore, the invention provides a stator assembly for a gas turbine assembly as claimed in claim 2.

Thus in a preferred embodiment of the present invention, a gas turbine engine having an annular flow path for working medium gases includes an array of rotor blades, an array of stator vanes downstream from the rotor blades and an annular channel extending radially and circumferentially within the outermost twenty percent (20%) of the working medium flow path, the annular channel extending rearwardly from a location between the blades and the vanes for capturing a significant portion of the wake turbulent flow from the tip region of the rotor blades, the channel being bounded by a pair of circumferentially extending walls at least one of which has acoustic treatment to absorb tonal and broadband noise.

In accordance with one particular embodiment of the invention, the inner wall of the annular channel is supported by the stator vanes and extends axially to split the flow path, the inner wall has a normalized length Lₙ (normalized by dividing the axial length of the wall by the axial chord length of the stator vanes) that is at least fifteen (15) times greater than the normalized height Hₙ of the channel (normalized by dividing the radial height of the channel by the radial span of the stator vanes) and the ratio of the absolute axial length L_{c} of the channel parallel to the flow to the absolute radial height H_{c} perpendicular to the flow is greater than three (3).

In a preferred embodiment of the present invention an array of rotor blades is disposed about an axis of rotation, each rotor blade having a chord length bᵣ as measured parallel to the axial direction. An array of stator vanes is downstream from the rotor blades, each stator vane having a chord length bᵥ as measured in the axial direction and a radial span S as measured at the leading edge. An annular flow path for working medium gases extends through the array of rotor blades and array of stator vanes. An annular channel extends rearwardly from a location between the rotor blades and stator vanes and extends radially and circumferentially within the outermost twenty percent (20%) of the working medium flow path. The inlet of the annular channel is spaced axially from the rotor blades such that the distance between the rotor blades and the leading edge of the inlet to the annular channel is less than four chord lengths (4bᵣ) of the rotor blade. The annular channel is bounded by an outer duct wall and a wall spaced radially inward from the outer duct wall that is supported by the stator vanes. The annular channel has an axial length L_{C} parallel to the axis of rotation and a radial height H_{C} perpendicular to the axis of rotation. In one detailed embodiment the annular channel has a ratio of the axial length to the radial height (L_{C}/H_{C}) greater than three (3). Acoustic treatment is present on at least one wall. In one detailed embodiment the normalized length Lₙ (Lₙ = L_{C}/bᵥ where length of inner wall L_{w} = L_{C}) of the inner wall is at least fifteen (15) times greater than the normalized height Hₙ (Hₙ = H_{C}/S)of the annular channel. This provides for greater interaction of the acoustic waves with the sound absorption structure.

It has also been realised that decreasing the number of radial airfoil surfaces in the outermost portion of the working medium flow path decreases recovery of thrust but provides for a greater reduction in noise due to the nature of the flow for a given decrease in thrust than does eliminating such surfaces at other locations in the working medium flow path or, in some instances, using an extensive amount of sound absorption structure. Thus in other embodiments of the invention, the number of struts extending across the annular channel is reduced compared to the number of stator vanes extending across the inner part of the flow path.

In another preferred embodiment of the present invention, the stator assembly has a number of struts extending radially outwardly from the second wall to the outer wall, that number being less than the number of stator vanes extending radially from the inner wall to the second wall.

In one detailed embodiment an example of a strut is one having an aerodynamic contour which is identical to a stator vane. In one detailed embodiment there is at least one strut in each quadrant of the annular channel. In another detailed embodiment the struts are circumferentially spaced by equal distances in the outer annular channel. In one detailed embodiment the struts are an integral portion of the stator vanes.

Of course it will be appreciated that the above noise reduction features may be combined. Thus in particularly preferred embodiments of the invention, a lesser number of struts may be provided in addition to acoustic treatment of at least one of the channel walls.

An advantage of the arrangements described above is the level of noise in a gas turbine engine associated with the interaction of the wake turbulent flow with the leading edges of struts which results from the number of struts in the outer annular channel upon which the wake turbulent flow from the tip of the rotor blades may impact. Another advantage is the level of aerodynamic efficiency of the engine which results from the wake turbulent flow from the tip region of the rotor blades impacting a fewer number of radial airfoil surfaces and the effect on thrust of drag losses from such flow. Another advantage is the ease of construction which results from the intermediate wall being attached to both the stators and struts. Another advantage is the ease of installation and effectiveness of noise treatment in the intermediate wall due to the fewer number of struts in the outer annular channel which provides for fewer areas that the sound absorption structure needs to be bonded to.

A further advantage of the arrangements described above is the level of tonal and broadband noise in a gas turbine engine which results from capturing wake turbulent flow from the tip region of an array of rotor blades in an annular channel and disposing structure within or associated with the channel to decrease the level of noise in the channel. Another advantage is the aerodynamic efficiency of the engine for a given level of tonal and broadband noise which results from treating wake turbulent flow from the tip region of the rotor blades and the effect on thrust of drag losses from such flow. In one embodiment the aerodynamic efficiency is increased by the lack of sound attenuation structure in the inner wall of the annular chamber.

Some preferred embodiments of the present invention will now be described, by way of example only, with reference to the accompanying drawings in which:
FIG. 1 is a partial perspective view of a gas turbine powerplant of the axial flow, turbofan type which includes a gas turbine engine and a nacelle with portions of the nacelle and engine broken away to show a portion of the secondary flow path for working medium gases and an array of rotor blades and stator vanes;
FIG. 2 is a side elevation view of the gas turbine powerplant shown in FIG. 1 with portions of the powerplant broken away for clarity;
FIG. 3 is an enlarged view of a portion of the gas turbine powerplant shown in FIG. 2 and shows diagrammatically the variation in turbulent kinetic energy of the flow as a function of spanwise location;
FIG. 4 is a cross-sectional view of an alternative embodiment of the powerplant shown in FIG. 2 corresponding to a view taken along the lines 4-4 of FIG. 2;
FIG. 5 is a developed view schematically showing the wake velocity profile of the tip region in the axial direction;
FIG. 6 is a graph of oscilloscope traces from a hot wire probe showing that the wake turbulent flow varies dramatically across the span of the stator inlet being most turbulent at the tip region; and
FIG. 7 is a cross-sectional view of an alternative embodiment of the powerplant shown in FIG. 2 corresponding to a view taken along the lines 4-4 of FIG. 2.

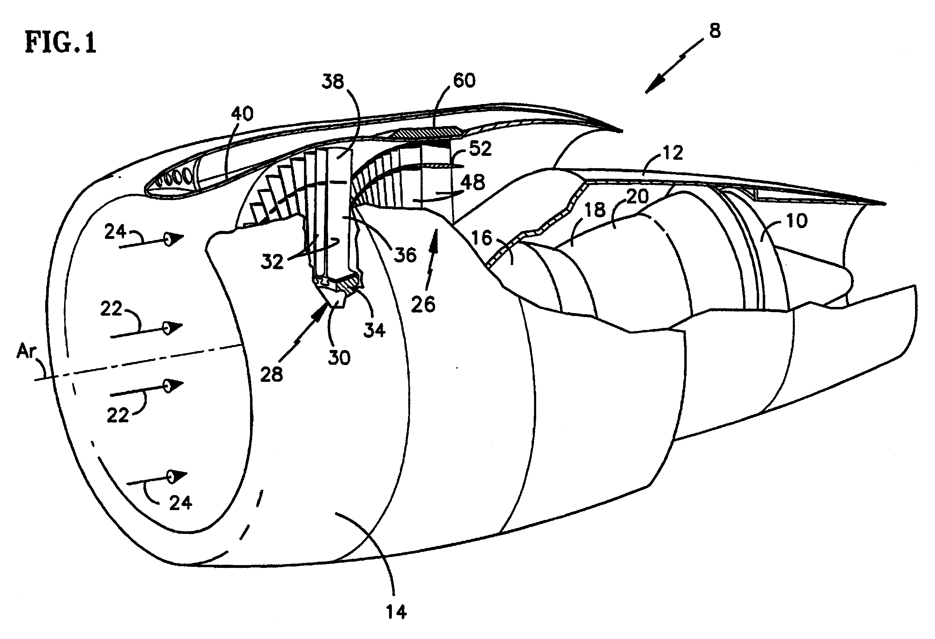

FIG. 1 shows a gas turbine powerplant 8 of the axial flow, turbofan type having an axis of rotation. The powerplant includes an engine 10 and a nacelle 12. The engine is formed of a fan section 14, a compressor section 16, a combustion section 18 and a turbine section 20. A primary flow path 22 for working medium gases extends rearwardly through these sections. A secondary flow path 24 for working medium gases is outwardly of the primary flow path.

The nacelle 12 circumscribes the engine and is adapted to both support and position the engine from a support structure such as an aircraft wing. The engine 10 and nacelle include a stator assembly 26 extending circumferentially about an axis of rotation Aᵣ to bound the working medium flow path. As used herein, the term "engine" includes the engine and portions of the nacelle integral with the engine which bounds the secondary flow path. A rotor assembly 28 is disposed about the axis of rotation Aᵣ. The rotor assembly includes a rotor disk 30 and a plurality of rotor blades 32. Each rotor blade extends outwardly from the disk across the working medium flow paths 22, 24 into proximity with the stator assembly.

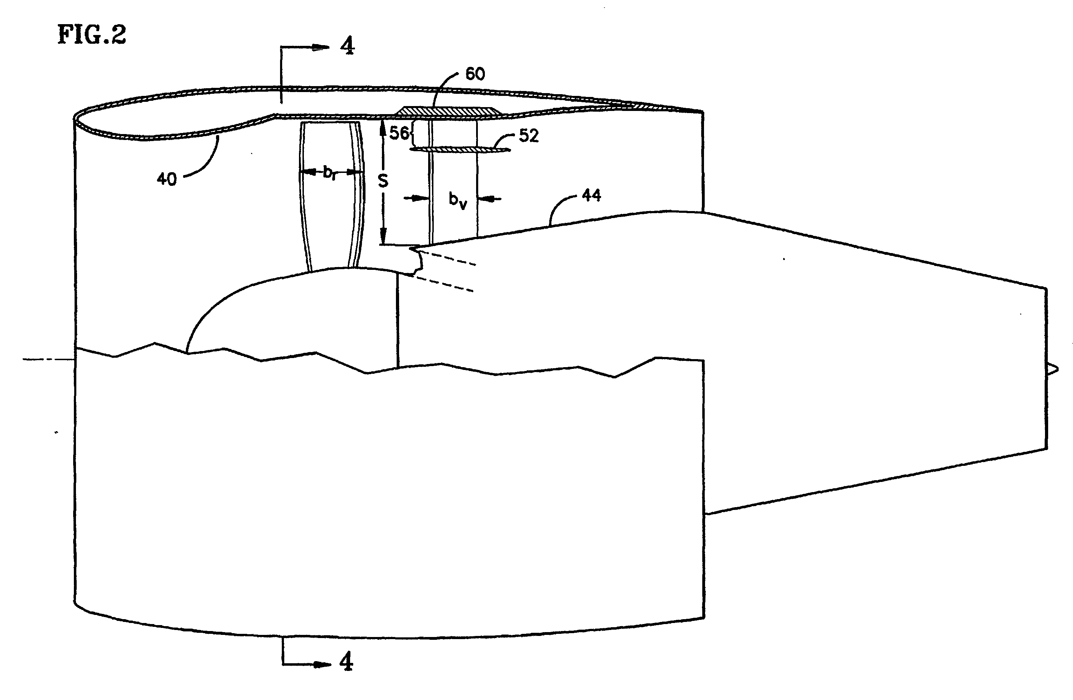

FIG. 2 is a side elevation view of the stator assembly of the axial flow gas turbine engine 10 shown in FIG. 1. The stator assembly 26 includes an outer wall 40 which extends circumferentially about the axis of rotation of the engine. The outer wall outwardly bounds the annular flow path for working medium gases. An inner wall 44 is spaced radially inwardly from the outer wall. The inner wall extends circumferentially about the axis of rotation and inwardly bounds the flow path for working medium gases. As shown, the annular flow path 24 for working medium gases has a height H_{D} as measured at the inlet to the stator assembly.

Each rotor blade 32 of the rotor assembly has a root region 34, a mid-span region 36 and a tip region 38. The tip region is in close proximity with the outer wall. The rotor blade has a chord length bᵣ as measured in the axial direction and radially at the mid-span location. An array of stator vanes 48 is spaced axially downstream from the array of rotor blades. Each stator vane extends radially inwardly from the outer wall to the inner wall across the annular flow path 24. The stator vane has a chord length bᵥ as measured in the axial direction and radially at the mid-span location. The stator vane has a radial span S as measured at the leading edge.

An intermediate wall 52 extends axially to split the flow path. The intermediate wall is spaced radially inwardly from the outer wall 40 leaving an annular channel 56 therebetween.

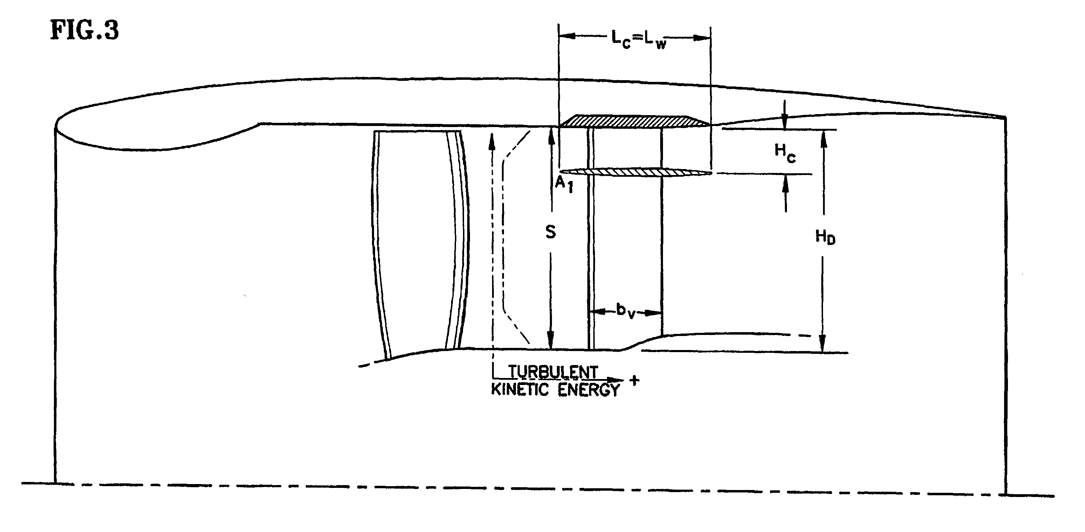

FIG. 3 is an enlarged view of a portion of the gas turbine engine 10 shown in FIG. 2 showing in more detail the relationship of the annular flow path to the components of the stator assembly. The annular channel 56 is outwardly bounded by the outer wall 40 and inwardly bounded by the intermediate wall 52. The intermediate wall is integrally attached to at least one of the stator vanes 48. The intermediate wall has a length axial L_{w}, and a normalized length Lₙ that is equal to the axial length L_{w} divided by the axial chord bᵥ of the stator (Lₙ = L_{w}/bᵥ). The ratio of the normalized length Lₙ is at least fifteen (15) times greater than the normalized height Hₙ of the annular channel 56 by reason of the height of the channel.

The annular channel 56 extends axially from a first location A₁ disposed between the blades 32 and vanes 48 and extends radially and circumferentially within the outermost twenty percent (20%) of the working medium flow path 24. The annular channel has a normalized height Hₙ that is equal to the actual radial height of the channel divided by the radial span of the stator vanes (Hₙ = H_{C}/S). The channel has an inlet with a leading edge spaced axially from the rotor blades such that the distance between the rotor blades and the leading edge of the inlet to the annular channel at the first location is less than four chord lengths (4bᵣ) of the rotor blade. The annular channel has an actual axial length L_{C} as measured axially. In the embodiment shown, the distance is the same as measured substantially parallel to the flow. The channel has an actual radial height that is less than or equal to twenty percent (20%) of the height H_{D} of the working medium flow path (H_{C} ≤0.20 H_{D}) as measured radially. In the embodiment shown, the distance is the same as measured substantially perpendicular to the flow. The aspect ratio of the channel is equal to the actual axial length L_{C} of channel to the actual radial height H_{C} of channel. This aspect ratio of the channel is greater than three (L_{C}/H_{C} > 3).

At least one of the walls bounding the annular channel 56 has sound permeable structure 60 disposed therein. In the embodiment shown, both the walls 40,52 bounding the annular channel have sound permeable structure disposed therein.

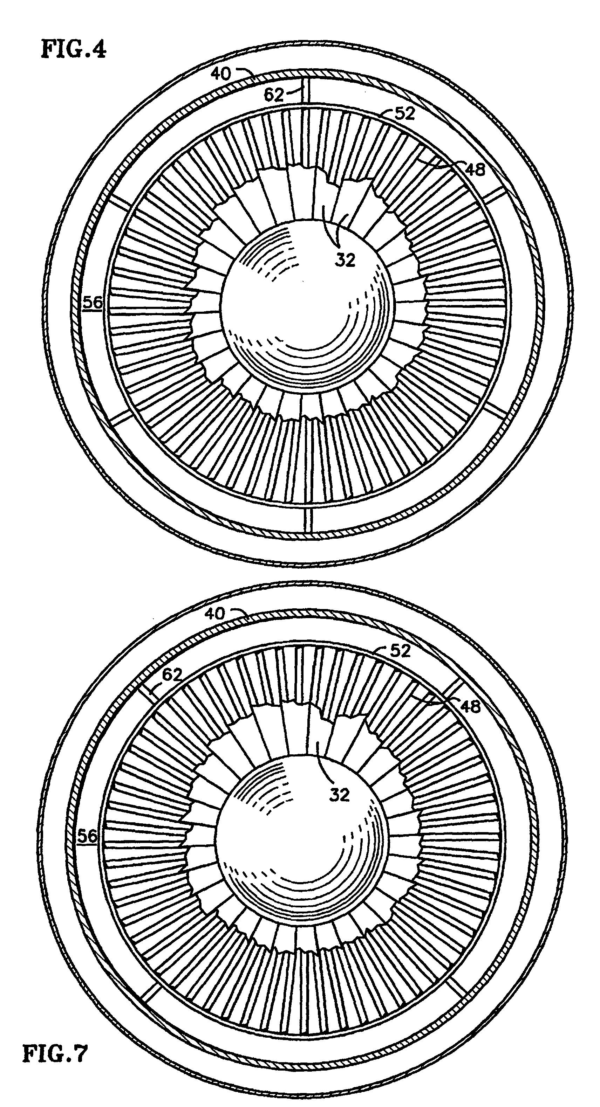

FIG. 4 is a cross-sectional view of a modification of the engine shown in FIG. 2 corresponding to a view taken along the lines 4-4 of FIG. 2. In this embodiment an array of a number of stator vanes 48 extends radially inwardly from the intermediate wall 52 across the annular flow path 24 to the inner wall 44. The array of stator vanes is spaced axially downstream from the rotor blades 32. Each stator vane has a chord length bᵥ as measured in the axial direction and a radial span S as measured at the leading edge. At least one of the stator vanes is adapted to engage the intermediate wall.

An array of a number of struts 62 extends radially outwardly from the intermediate wall 52 across the annular flow path 24 to the outer wall 40. The number of struts is less than the number of vanes supporting the intermediate wall. The array of struts is axially downstream of the array of rotor blades 32. The intermediate wall is outwardly attached and supported by at least one strut extending across the annular channel. The intermediate wall is integrally attached to and inwardly supported by at least one stator vane 48 extending radially across the annular flow path. One example of a strut is one having an aerodynamic contour which is identical to the stator vane.

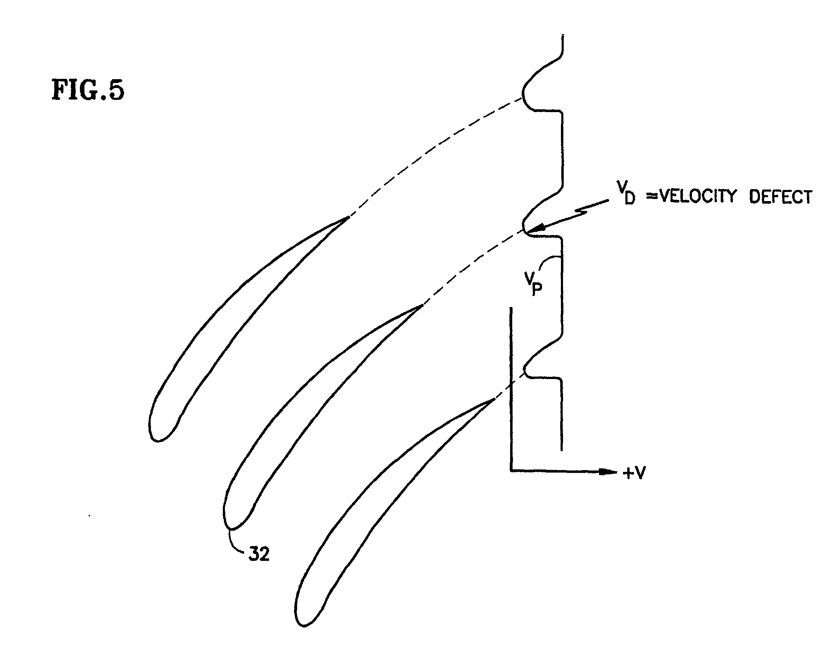

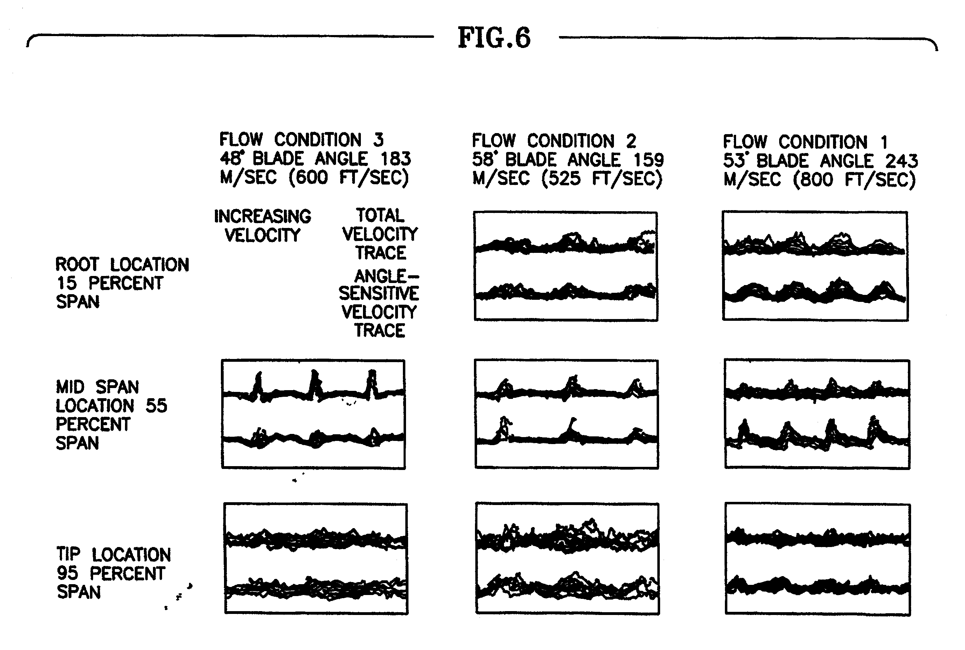

FIG. 5 is a developed view schematically showing the wake velocity profile of the tip region of the rotor blades. FIG 6 relates to the wake turbulent flow and shows how this flow varies across the span of the stator inlet. Both FIG 5 and FIG 6 are discussed below.

FIG. 7 is a cross-sectional view of a modification of the embodiment of the engine shown in FIG. 4 corresponding to a view taken along the lines 4-4 of Fig. 2. As shown in FIG. 7, the annular channel 56 has four (4) quadrants. At least one strut 62 is disposed in each quadrant of the annular channel. The struts do not have to be circumferentially spaced by equal distances in the annular channel.

During operation of the gas turbine engine, the working medium gases are compressed in the fan section 14 and the compressor section 16. The gases are burned with fuel in the combustion section 18 to add energy to the gases. The hot, high pressure gases are expanded through the turbine section 20 to produce thrust and useful work. The work done by expanding gases drives rotor assemblies in the engine, such as the rotor assembly 28 extending to the fan section, about the axis of rotation Aᵣ.

The gases are flowed along the working medium flow path at high velocities into the rotor assembly 28. As the rotor assembly is rotated at high speed, the rotor blades 32 travel at high velocities about the axis of rotation to compress the working medium gases in the primary flow path 22 and the secondary flow path 24. The rotor blades passing through the gases at high velocities generate acoustic energy or noise.

As each rotor blade 32 passes through the gases, the blade leaves a wake or track of turbulent gases behind the blade which is commonly referred to as wake turbulent flow. In addition, the tip region 38 has secondary flow patterns adjacent the tips of the rotor blades due to the interaction of the rotor blade with the outer wall boundary layer 40. This interaction introduces further turbulence into the wake turbulent flow at the tip region. This wake turbulent flow from rotor blades 32 sweeping past stator vanes 48 and struts 62 produces pressure fluctuations on the vane and strut surfaces. Fluctuating aerodynamic pressure on the surfaces of the stator vanes and struts, produces forces which in turn generates additional noise.

FIG. 6 shows oscilloscope traces from a hot wire probe showing that the characteristics of the wake turbulent flow vary dramatically with time and with radial location across the span of the stator 48 inlet. The modulation in amplitude and time is due to the turbulence associated with this flow. In particular, FIG. 6 shows the traces for three flow conditions at the root region 34, mid-span region 36, and tip region 38 of the rotor blade.

At the mid-span region 36 the wakes of turbulent flow are seen to be isolated or distinct. A periodic pattern can be seen in this region. In the root region 34 the wakes are nearly merged and highly turbulent; however, a periodic pattern in this region can also be ascertained. As shown in FIG. 6, the wake turbulent flow is most turbulent at the tip region 38. At the tip region, the individual blade wakes are nearly indistinguishable in the turbulence. No periodic pattern can be ascertained in the tip region of the rotor blade 32.

The characteristics of the wake turbulent flow have been studied to understand the role of this flow in the generation of noise at the stator vanes 48. Wake turbulent flow has two components: a random component and a steady component. The steady component is shown in FIG. 5 which is a developed view schematically showing the wake velocity profile V_{P} of the tip region in the axial direction. In the velocity profile, velocity defects V_{D} are localized areas of decreased velocity corresponding to the tip regions 38 of the rotor blades 32. These velocity defects comprise the steady component of the flow. The steady component is also commonly referred to as the harmonic wake component.

The random component of the wake turbulent flow is represented by the turbulent kinetic energy plotted in FIG. 3. As shown in FIG. 3, the turbulent kinetic energy varies dramatically across the span of the stator 48 inlet. The turbulent kinetic energy is much greater at the root region 34 and tip region 38 of the rotor blade 32 than at the mid-span region 36 of the rotor blade. The turbulent kinetic energy present in the root region of the rotor blades is attenuated by being absorbed into the low pressure compressor. The random component is also commonly referred to as the broadband wake component.

The two components of the wake turbulent flow, harmonic (steady) and broadband (random) components, are related to components of the noise spectrum. The harmonic wake component causes harmonic or tonal noise and the broadband wake component causes broadband noise.

As mentioned earlier, turbulent flow produces noise when interacting with each of the stator vanes 48 and the adjacent structure; and the flow produces drag losses. Due to its turbulent nature, the flow in the outermost portion has high aerodynamic losses as compared to the remainder of the flow as dynamic pressure is converted to static pressure (thrust). Accordingly, this tip flow provides a smaller contribution to thrust than does a like amount of the remainder of the flow. And due to its turbulent nature, the flow in the outermost portion provides a large contribution to fan noise. It is therefore aerodynamically efficient to decrease the excessive noise energy in this outer region while accepting the reduced thrust potential.

Accordingly, as shown in FIG. 4 and FIG. 7, the number of radial surfaces 62 in the outer annular channel may be reduced to a lesser number of surfaces than the number of radially extending stator vanes. This results in reduced thrust because there are fewer radially extending surfaces downstream of the rotor blades to redirect the flow of gases to increase the axial component of velocity of the flow. There is a decrease in recovery of the static pressure of the gases and therefore a decrease in generation of thrust in the outer annular channel as compared to flow inwardly of the intermediate wall.

By accepting a reduced amount of thrust, a fewer number of struts 62 are provided such that the sound energy discharged from the tip region of the rotor blades impacts on a smaller number of radially extending surfaces generating a decreased amount of noise. Therefore, the penalty in thrust is not as high when the wake turbulent flow at the tip region, after impacting with a fewer number of radially extending surfaces, is discharged from the engine.

The most turbulent portion of wake is treated with sound absorbing structure 60 to reduce noise before the noise escapes into the general fan flow path. This is accomplished by at least one of the walls bounding the annular channel 56 having sound permeable structure disposed therein.

In particular, the inner 52 and outer walls 40 of the annular channel 56 formed within the outermost twenty percent (20%) of the working medium flow path 24 capture a significant portion of the wake turbulent flow discharged from the tip region 38 of the rotor blades 32. The captured turbulent flow is flowed through the channel where it is forced to interact with the sound absorption structure. Acoustic energy from the gases passing through the channel is absorbed by the sound permeable structure as the turbulent gases impinge on the surfaces of the stator assembly 26. The large aspect ratio of the normalized length to normalized height of the annular channel by reason of the height of the channel provides for increased interaction of the acoustic waves with the sound absorption structure 60 while only capturing flow in the outermost portion of the working medium flow path.

As will be realized, alternate constructions of the present invention may have a channel whose height is less than twenty percent (20%) of the height H_{D} of the working medium flow path. Such constructions will have less attenuation of noise than other constructions within twenty percent of the height H_{D} (that is less than or equal to twenty percent of the height H_{D}) but will have less aerodynamic drag by reason of the reduced mass flow through this smaller channel.

In summary, because the outermost portion of the flow does not provide as great a contribution to thrust because of its turbulence as does flow inwardly of the wake region, treatment to dissipate the acoustic energy within the outermost twenty percent (20%) does not interfere with engine thrust as would such treatment elsewhere along the span. Alternatively or in addition the number of leading edges interacting with the turbulent flow may be reduced in the annular channel 56 which reduces thrust. However, the wake turbulent flow does not impact many strut 62 surfaces and less acoustic energy is generated.

Although the invention has been shown and described with respect to detailed embodiments thereof, it should be understood by those skilled in the art that various changes in form and detail thereof may be made without departing from the scope of the invention as defined in the following claims.

## Claims

1. A stator assembly for a gas turbine engine having an axis of rotation Aᵣ a flow path for working medium gases disposed about the axis of rotation, a first outer wall (40) extending circumferentially about the axis of rotation and outwardly bounding the flow path for working medium gases, an array of rotor blades (32) having an axial location, each rotor blade (32) extending radially outwardly across the flow path and having a tip region (38) such that the tip region (38) is in close proximity with the outer wall (40), an array of stator vanes spaced axially downstream from the array of rotor blades, each stator vane (48) extending radially inwardly across the flow path, a second wall (52) extending axially to split the flow path, the second wall (52) being spaced radially inwardly from the first outer wall (40) to define an annular channel (56) therebetween, the second wall (52) being attached to the stator vanes (48),
the annular channel (56) extending axially from an axial location that is disposed between the blades and vanes and said channel extending radially and circumferentially and disposed entirely within the outermost twenty percent (20%) of the working medium flow path, **characterised in that**
at least one of said walls (40;52) bounding the annular channel (56) has sound absorbing structure (60) disposed therein.

2. The stator assembly of claim 1, wherein each stator vane (48) further has a leading edge, a trailing edge, a chord length bᵥ as measured in the axial direction and a radial span S as measured at the leading edge, the annular channel (56) further has an axial length L_{C}, a radial height H_{C}, a normalized length Lₙ that is equal to the length of second wall (52) divided by the axial chord of the stator vane (Lₙ = L_{w}/bᵥ), a normalized height Hₙ of the channel (56) that is equal to the radial height of the channel divided by the radial span of the stator vane (Hₙ = H_{C}/S), **characterized by** the ratio of the normalized length of the channel (56) being at least fifteen (15) times greater than the normalized height of the channel (56).

3. The stator assembly of claim 2, **characterized by** the ratio of the axial length Lc of the channel (56) to the radial height H_{C} of the channel (56) being greater than 3 (L_{C}/H_{C} > 3).

4. The stator assembly of claim 1, 2 or 3 wherein the stator assembly further includes an inner wall (44) spaced radially inwardly from the first outer wall (40), the inner wall (44) extending circumferentially about the axis of rotation and inwardly bounding the working medium gases, and wherein each rotor blade (32) further has a leading edge, a trailing edge, a chord length bᵥ as measured in the axial direction, **characterized by** the inlet of the channel (56) being spaced axially from the trailing edge of the rotor blades (38) such that the distance between the rotor blades and the inlet to the channel (56) is less than four chord lengths of the rotor blade (32), and the stator vanes (48) extend from the inner wall (44) to the second wall (52) and are integrally attached thereto.

5. The stator assembly of any preceding claim, wherein the gas turbine engine includes a portion of nacelle structure which is integrally attached to the gas turbine engine and which bounds the working medium flow path to form at least a part of the outer wall (40), and the annular channel (56)is further **characterized by** the outer wall (40) and the second or intermediate wall (52) having sound absorbing structure (60) disposed therein.

6. A stator assembly as claimed in claim 1, said second wall (52) having a length L_{w}, and a normalized length Lₙ that is equal to the length of second wall (52) divided by the axial chord of the stator vane bᵥ (Lₙ = L_{w}/bᵥ) ;
said annular channel (56) having
an inlet spaced axially from the trailing edge of the rotor blades (32) such that the distance between the rotor blades (32) and the inlet to the annular channel (56) is less than four chord lengths (4bᵥ) of the rotor blade,
an axial length Lc that is equal to the axial length Lw of the second wall (L_{C}), a radial height H_{D} of the channel (56) that is less than or equal to 0.2 times the height H_{D} of the working medium flow path (H_{C} ≤ 0.20 H_{D}),
a normalized height Hₙ of the channel (56) that is equal to the radial height of the channel divided by the radial span of the stator vane (Hₙ = H_{C}/S),
a ratio of the axial length of the channel (56) to the radial height of the channel greater than 3(L_{C}/H_{C} > 3),
said sound permeable structure disposed absorbs acoustic energy from the gases passing through the channel (56) as the turbulent gases impinge on the surfaces of the outer wall (40), the second wall (52) and the stator vanes (48) and wherein the normalized length Lₙ is at least fifteen (15) times greater than the normalized height Hₙ of the annular channel.

7. The stator assembly of claim 6, wherein the radial height H_{C} of the channel (56) is equal to 0.2 times the height H_{D} of the working medium flow path (H_{C} = 0.2H_{D}).

8. The stator assembly of any preceding claim, **characterized by** a number of struts (62) extending radially outwardly from the second wall (52) to the outer wall (40), that number being less than the number of stator vanes (48) extending radially from the inner wall (44) to the second wall (52).

9. The stator assembly of claim 8 **characterized in that** there are at least four (4) struts (62).

10. The stator assembly of claim 8 or 9 **characterized by** at least one of the struts (62) having an aerodynamic contour which is identical to that of a stator vane (48).

11. The stator assembly of claim 10 **characterized by** the aerodynamically contoured strut(s) (62) further being integrally formed with the stator vane(s) (48) such that the aerodynamic contour of the stator vane(s) (48) extends radially outwardly to the outer wall (40).

12. The stator assembly of any of claims 8 to 11 wherein the annular channel (56) further has four (4) quadrants and with at least one strut (62) being disposed in each quadrant of the annular channel (56).

13. The stator assembly of any of claims 10 to 15 **characterized by** the struts (62) being circumferentially spaced by equal distances in the annular channel (56).

14. A method for forming a flow path for working medium gases for a gas turbine engine having an axis of rotation Ar, and an outer wall (40) extending circumferentially about the axis of rotation Ar outwardly bounding the flow path, comprising the steps of:
disposing an array of rotor blades in the gas turbine engine, each rotor blade (32) extending across the flow path and having a tip region (38);
disposing an array of stator vanes in the gas turbine engine spaced axially downstream from the array of rotor blades, each stator vane (48) extending across the flow path;
disposing an intermediate wall (52) radially inwardly from the outer wall such that the intermediate wall and the outer wall form an annular channel (56) disposed entirely within the radially outermost twenty percent (20%) of the working medium flow path between the outer wall and intermediate wall; **characterised by**
disposing sound attenuation structure (60) within at least one of the walls bounding the annular channel (56) to capture sound energy discharged from the tip region of the rotor blades.

15. The method for forming a flow path for working medium gases of claim 14, wherein the step of disposing an intermediate wall (52) radially inwardly from the outer wall (40) includes the step of integrally attaching the intermediate wall to the stator vanes (48), and wherein the step of disposing sound attenuation structure (60) adjacent the annular channel (56) includes the step of integrally attaching sound attenuation structure adjacent the annular channel to at least a portion of the outer wall and the intermediate wall to capture sound energy discharged from the tip region of the rotor blades (32).

16. The method for forming a flow path for working medium gases of claim 14 or 15, wherein the step of disposing an array of stator vanes (48) in the gas turbine engine includes the step of each stator vane further having a leading edge, a trailing edge, a chord length bᵥ as measured in the axial direction and a radial span S as measured at the leading edge wherein the step of disposing an intermediate wall (52) radially inwardly from the outer wall (40) such that the intermediate wall and the outer wall form a channel (56) includes the step of the channel further having an axial length L_{C}, a radial height H_{C}, normalized length Lₙ, that is equal to the axial length of the channel divided by the axial chord of the stator vane (Lₙ =L_{C}/bᵥ), a normalized height HE of the channel that is equal to the radial height of the channel divided by the radial span of the stator vane (Hₙ = H_{C}/S), and wherein the ratio of the normalized length of the channel is at least fifteen (15) times greater than the normalized height of the channel by reason of the height of the channel which provides for increased interaction of the acoustic waves with the sound absorption structure (60).

## Patentansprüche

1. Statoranordnung für eine Gasturbinenmaschine mit einer Rotationsachse Aᵣ, einem Strömungsweg für Arbeitsmediums-Gase, der um die Rotationsachse angeordnet ist, einer ersten äußeren Wand (40), die sich umfangsmäßig um die Rotationsachse erstreckt und nach außen den Strömungsweg für Arbeitsmediums-Gase begrenzt, eine Reihe von Rotorlaufschaufeln (32) mit einem axialen Position, wobei jede Rotorlaufschaufeln (32) sich radial nach außen über den Strömungsweg erstreckt und einen Spitzenbereich (38) aufweist, so dass der Spitzenbereich (38) sich in enger Nähe zu der äußeren Wand (40) befindet, eine Reihe von Statorleitschaufeln, die axial strömungsabwärts von der Anordnung der Rotorlaufschaufeln beabstandet ist, wobei jede Statorleitschaufel (48) sich radial nach innen über den Strömungsweg erstreckt, eine zweite Wand (52), die sich axial erstreckt, um den Strömungsweg axial zu zerteilen, wobei die zweite Wand (52) radial nach innen von der ersten äußeren Wand (40) beabstandet ist, um einen ringförmigen Kanal (56) dazwischen zu definieren, wobei die zweite Wand (52) an den Statorleitschaufeln (48) angebracht ist, wobei der ringförmige Kanal (56) sich axial von einer axialen Position erstreckt, die zwischen den Laufschaufeln und den Leitschaufeln angeordnet ist, und sich der Kanal radial und umfangsmäßig erstreckt und vollständig innerhalb der äußersten zwanzig Prozent (20%) des Arbeitsmediums-Strömungswegs erstreckt,
**dadurch gekennzeichnet, dass** mindestens eine der Wände (40; 52), welche den ringförmigen Kanal (56) begrenzen, eine darin angeordnete schallabsorbierende Struktur (60) hat.

2. Statoranordnung nach Anspruch 1, wobei jede Statorleitschaufel (48) ferner eine Vorderkante, eine Hinterkante, eine Profilsehnenlänge bᵥ, gemessen in Axialrichtung, und eine radiale Erstreckung S, gemessen an der Vorderkante hat, wobei der ringförmige Kanal (56) ferner eine axiale Länge L_{C}, eine radiale Höhe H_{C}, eine normierte Länge Lₙ, die gleich der Länge der zweiten Wand (52) geteilt durch die axiale Profilsehne der Statorleitschaufel ist (Lₙ = L_{w}/bᵥ), und eine normierte Höhe Hₙ des Kanals (56), die gleich der radialen Höhe des Kanals geteilt durch die radiale Erstreckung der Statorleitschaufel ist, (Hₙ = H_{C}/S) hat,
**dadurch gekennzeichnet, dass** das Verhältnis der normierten Länge des Kanals (56) mindestens fünfzehn (15) Mal größer als die normierte Höhe des Kanals (56) ist.

3. Statoranordnung nach Anspruch 2, **dadurch gekennzeichnet, dass** das Verhältnis der axialen Länge L_{c} des Kanals (56) zu der radialen Höhe H_{C} des Kanals (56) größer als 3 ist (L_{C}/H_{C} > 3).

4. Statoranordnung nach Anspruch 1, 2 oder 3, wobei die Statoranordnung ferner aufweist eine innere Wand (44), die radial nach innen von der ersten äußeren Wand (40) beabstandet ist, wobei sich die innere Wand (44) umfangsmäßig um die Rotationsachse erstreckt und nach innen die Arbeitsmediums-Gase begrenzt, und wobei jede Rotorlaufschaufel (32) ferner eine Vorderkante, eine Hinterkante, eine Profilsehnenlänge bᵥ, gemessen in der axialen Richtung, hat,
**dadurch gekennzeichnet, dass** der Einlass des Kanals (56) axial von der Hinterkante der Rotorlaufschaufeln (38) derart beabstandet ist, dass die Strecke zwischen den Rotorlaufschaufeln und dem Einlass zu dem Kanal (56) geringer ist als vier Profilsehnenlängen der Rotorlaufschaufel (32), und dass sich die Statorleitschaufeln (48) von der inneren Wand (44) zu der zweiten Wand (52) erstrecken und integral daran angebracht sind.

5. Statoranordnung nach einem der vorangehenden Ansprüche, wobei die Gasturbinenmaschine einen Teil einer Gondelstruktur beinhaltet, die integral an der Gasturbinenmaschine angeschlossen ist und den Arbeitsmediums-Strömungsweg begrenzt, um mindestens einen Teil der äußeren Wand (40) zu bilden, und wobei der ringförmige Kanal (56) ferner **dadurch gekennzeichnet ist, dass** die äußere Wand (40) und die zweite Wand oder Zwischenwand (52) eine darin angeordnete schallabsorbierende Struktur (60) haben.

6. Statoranordnung nach Anspruch 1, wobei die zweite Wand (52) eine Länge L_{w} und eine normierte Länge Lₙ hat, die gleich der Länge der zweiten Wand (52) geteilt durch die axiale Profilsehnenlänge der Statorleitschaufel bᵥ ist (Lₙ = L_{w}/bᵥ);
wobei der ringförmige Kanal (56) hat
einen Einlass, der axial von der Vorderkante der Rotorlaufschaufeln (32) derart beabstandet ist, dass die Strecke zwischen den Rotorlaufschaufeln (32) und dem Einlass zu dem ringförmigen Kanal (56) kleiner ist als vier Profilsehnenlängen (4bᵥ) der Rotorlaufschaufeln;
eine axiale Länge L_{c}, die gleich der axialen Länge L_{w} der zweiten Wand (L_{C}) ist, eine radiale Höhe H_{D} des Kanals (56), die kleiner oder gleich 0,2 Mal der Höhe H_{D} des Arbeitsmediums-Strömungswegs ist (H_{C} ≤ 0,2 H_{D}),
eine normierte Höhe Hₙ des Kanals (56), die gleich der radialen Höhe des Kanals geteilt durch die radiale Erstreckung der Statorleitschaufel ist (Hₙ = H_{C}/S),
ein Verhältnis der axialen Länge des Kanals (56) zu der radialen Höhe des Kanals, das größer als 3 ist (L_{C}/H_{C} > 3),
wobei die angeordnete schalldurchlässige Struktur akustische Energie von den Gasen absorbiert, die durch den Kanal (56) strömen, wenn die turbulenten Gase auf die Oberfläche der äußeren Wand (40), der zweiten Wand (52) und der Statorleitschaufeln (48) treffen, und wobei die normierte Länge Lₙ mindestens fünfzehn (15) Mal größer als die normierte Höhe Hₙ des ringförmigen Kanals ist.

7. Statoranordnung nach Anspruch 6, wobei die radiale Höhe H_{C} des Kanals (56) gleich 0,2 Mal der Höhe H_{D} des Arbeitsmediums-Strömungswegs ist (H_{C} = 0,2 H_{D}).

8. Statoranordnung nach einem der vorangehenden Ansprüche, **gekennzeichnet durch** eine Anzahl von Streben (62), die sich radial von der zweiten Wand (52) zu der äußeren Wand (40) erstrecken, wobei die Anzahl geringer ist als die Anzahl von Statorleitschaufeln (48), die sich radial von der inneren Wand (44) zu der zweiten Wand (52) erstrecken.

9. Statoranordnung nach Anspruch 8, **dadurch gekennzeichnet, dass** es mindestens vier (4) Streben (62) gibt.

10. Statoranordnung nach Anspruch 8 oder 9, **dadurch gekennzeichnet, dass** mindestens eine der Streben (62) eine aerodynamische Kontur besitzt, die identisch zu der einer Statorleitschaufel (48) ist.

11. Statoranordnung nach Anspruch 10, **dadurch gekennzeichnet, dass** die aerodynamisch konturierte(n) Strebe(n) (62) ferner integral mit der (den) Statorleitschaufel(n) (48) gebildet ist (sind), so dass sich die aerodynamische Kontur der Statorleitschaufel(n) (48) radial nach außen zu der äußeren Wand (40) erstreckt.

12. Statoranordnung nach einem der Ansprüche 8 bis 11, wobei der ringförmige Kanal (56) ferner vier (4) Quadranten hat und wobei mindestens eine Strebe (62) in jedem Quadranten des ringförmigen Kanals (56) angeordnet ist.

13. Statoranordnung nach einem der Ansprüche 10 bis 15, **dadurch gekennzeichnet, dass** die Streben (62) umfangsmäßig um gleiche Strecken in dem ringförmigen Kanal (56) beabstandet sind.

14. Verfahren zum Herstellen eines Strömungswegs für Arbeitsmediums-Gase für eine Gasturbinenmaschine mit einer Rotationsachse Aᵣ, und einer äußeren Wand (40), die sich umfangsmäßig um die Rotationsachse Aᵣ erstreckt und nach außen den Strömungsweg begrenzt, aufweisend die folgenden Schritte:
Anordnen einer Reihe von Rotorlaufschaufeln in der Gasturbinenmaschine, wobei jede Rotorlaufschaufet (32) sich über den Strömungsweg erstreckt und einen Spitzenbereich (38) hat;
Anordnen einer Reihe von Statorleitschaufeln in der Gasturbinenmaschine, die axial strömungsabwärts von der Reihe von Rotorlaufschaufeln beabstandet ist, wobei jede Statorleitschaufel (48) sich über den Strömungsweg erstreckt;
Anordnen an einer Zwischenwand (52) radial innerhalb von der äußeren Wand derart, dass die Zwischenwand und die äußere Wand einen ringförmigen Kanal (56) bilden, der vollständig in den radial äußersten zwanzig Prozent (20%) des Arbeitsmediums-Strömungswegs zwischen der äußeren Wand und der Zwischenwand angeordnet ist, **gekennzeichnet durch**
Anordnen von einer schallabschwächenden Struktur (60) in mindestens einer der Wände, die den ringförmigen Kanal (56) begrenzt, um Schallenergie einzufangen, die von dem Spitzenbereich der Rotorlaufschaufeln abgegeben wird.

15. Verfahren zum Bilden eines Strömungswegs für Arbeitsmediums-Gase nach Anspruch 14, wobei der Schritt des Anordnens einer Zwischenwand (52) radial innerhalb von der äußeren Wand (40) den Schritt des integralen Anschließens der Zwischenwand an den Statorleitschaufeln (48) beinhaltet, und wobei der Schritt des Anordnens von einer schallabschwächenden Struktur (60) dem ringförmigen Kanal (56) benachbart den Schritt des integralen Anbringens von schallabschwächender Struktur dem ringförmigen Kanal benachbart an mindestens einem Teil der äußeren Wand und der Zwischenwand beinhaltet, um Schallenergie einzufangen, die von dem Spitzenbereich der Rotorlaufschaufel (32) abgegeben wird.

16. Verfahren zum Herstellen eines Strömungswegs für Arbeitsmediums-Gase nach Anspruch 14 oder 15, wobei der Schritt des Anordnens einer Reihe von Statorleitschaufeln (48) in der Gasturbinenmaschine den Schritt aufweist, dass jede Statorleitschaufel ferner eine Vorderkante, eine Hinterkante, eine Profilsehnenlänge bᵥ, gemessen in der axialen Richtung, und eine radiale Erstreckung S, gemessen an der Vorderkante, hat, wobei der Schritt des Anordnens einer Zwischenwand (52) radial innerhalb von der äußeren Wand (40) derart, dass die Zwischenwand und die äußere Wand einen Kanal (56) bilden, den Schritt beinhaltet, dass der Kanal ferner eine axiale Länge L_{C}, eine radiale Höhe H_{C}, eine normierte Länge Lₙ, die gleich der axialen Länge des Kanals geteilt durch die axiale Profilsehne der Statorleitschaufel ist (Lₙ = L_{C}/bᵥ), und eine normierte Höhe Hₙ des Kanals hat, die gleich der radialen Höhe des Kanals geteilt durch die radiale Erstreckung der Statorleitschaufel ist (Hₙ = H_{C}/S), und wobei das Verhältnis der normierten Länge des Kanals mindestens fünfzehn (15) Mal größer als die normierte Höhe des Kanals in Folge der Höhe des Kanals ist, was für eine erhöhte Wechselwirkung der Schallwellen mit der schallabsorbierenden Struktur (60) sorgt.

## Revendications

1. Ensemble stator pour une turbine à gaz possédant un axe de rotation Aᵣ, un passage d'écoulement pour les gaz de fluide moteur placé autour de l'axe de rotation, une première paroi extérieure (40) formant une forme cylindrique autour de l'axe de rotation et délimitant vers l'extérieur le passage d'écoulement des gaz de fluide moteur, une batterie d'aubes de rotor (32) possédant un emplacement axial, chaque aube de rotor (32) se prolongeant radialement vers l'extérieur en travers du passage d'écoulement et possédant une zone d'extrémité (38), telle que la zone d'extrémité (38) est à proximité immédiate de la paroi extérieure (40), une batterie d'aubes de stator espacées axialement en aval de la batterie d'aubes de rotor, chaque aube de stator (48) se prolongeant radialement vers l'intérieur en travers du passage d'écoulement, une seconde paroi (52) se prolongeant axialement pour diviser en deux le passage d'écoulement, la seconde paroi (52) étant située à distance radialement vers l'intérieur de la première paroi extérieure (40) afin de définir un canal annulaire (56) entre elles, la seconde paroi (52) étant fixée aux aubes de stator (48),
le canal annulaire (56) se prolongeant axialement depuis un emplacement axial qui est placé entre les aubes de rotor et les aubes de stator et ledit canal se prolongeant radialement et sur la circonférence et placé entièrement dans les vingt p. cent (20 %) les plus à l'extérieur du passage d'écoulement du fluide moteur, **caractérisé en ce que**
au moins une desdites parois (40 ; 52) délimitant le canal annulaire (56) possède une structure absorbant le son (60) placée à l'intérieur.

2. Ensemble stator selon la revendication 1, dans lequel chaque aube de stator (48) possède en outre un bord d'attaque, un bord de fuite, une longueur de corde bᵥ telle que mesurée dans la direction axiale et une longueur radiale S telle que mesurée au bord d'attaque, le canal annulaire (56) possédant en outre une longueur axiale L_{C}, une hauteur radiale H_{C}, une longueur normalisée Lₙ qui est égale à la longueur de la seconde paroi (52) divisée par la corde axiale de l'aube du stator (Lₙ = L_{w}/bᵥ), une hauteur normalisée Hₙ du canal (56) qui est égale à la hauteur radiale du canal divisée par la longueur radiale de l'aube du stator (Hₙ = H_{C}/S), **caractérisé en ce que** la longueur normalisée du canal (56) est au moins quinze (15) fois supérieure à la hauteur normalisée du canal (56).

3. Ensemble stator selon la revendication 2, **caractérisé en ce que** le rapport de la longueur axiale L_{C} du canal (56) sur la hauteur radiale Hc du canal (56) est supérieur à 3 (L_{C}/H_{C} > 3).

4. Ensemble stator selon la revendication 1, 2 ou 3, dans lequel l'ensemble stator comprend en outre une paroi intérieure (44) située à distance radialement vers l'intérieur de la première paroi extérieure (40), la paroi intérieure (44) s'étendant selon une forme cylindrique autour de l'axe de rotation et limitant vers l'intérieur les gaz du milieu moteur, et dans lequel chaque aube de rotor (32) comprend en outre un bord d'attaque, un bord de fuite, une longueur de corde bᵥ telle que mesurée dans la direction axiale, **caractérisé en ce que** l'entrée du canal (56) est espacée axialement du bord de fuite des aubes de rotor (38) de sorte que la distance entre les aubes du rotor et l'entrée du canal (56) est inférieure à quatre longueurs de corde de l'aube de rotor (32), et les aubes du stator (48) se prolongent depuis la paroi intérieure (44) jusqu'à la seconde paroi (52) et y sont intégralement fixées.

5. Ensemble stator selon l'une quelconque des revendications précédentes, dans lequel la turbine à gaz comprend une portion de structure de compartiments qui est intégralement fixée à la turbine à gaz et qui délimite le passage d'écoulement du fluide moteur pour former au moins une partie de la paroi extérieure (40), et le canal annulaire (56) est en outre **caractérisé en ce que** la paroi extérieure (40) et la seconde paroi ou paroi intermédiaire (52) possèdent une structure insonore (60) placée à l'intérieur.

6. Ensemble stator selon la revendication 1, ladite seconde paroi (52) possédant une longueur L_{w} et une longueur normalisée Lₙ qui est égale à la longueur de la seconde paroi (52) divisée par la corde axiale de l'aube de stator bᵥ (Lₙ = L_{w}/bᵥ) ;
ledit canal annulaire (56) possédant
une entrée située à distance axialement du bord de fuite des aubes de rotor (32), de sorte que la distance entre les aubes de rotor (32) et l'entrée du canal annulaire (56) est inférieure à quatre longueurs de corde (4 bᵥ) de l'aube de rotor,
une longueur axiale Le qui est égale à la longueur axiale L_{w} de la seconde paroi (L_{C}), une hauteur radiale H_{D} du canal (56) qui est inférieure ou égale à 0,2 fois la hauteur H_{D} du passage d'écoulement du fluide moteur (H_{C} ≤ 0,20 H_{D}),
une hauteur normalisée Hₙ du canal (56) qui est égale à la hauteur radiale du canal divisée par la longueur radiale de l'aube de stator (Hₙ = H_{C}/S),
un rapport de la longueur axiale du canal (56) sur la hauteur radiale du canal supérieur à 3 (L_{C}/H_{C} > 3),
ladite structure insonore absorbe l'énergie acoustique des gaz passant à travers le canal (56) lorsque les gaz turbulents heurtent les surfaces de la paroi extérieure (40), la seconde paroi (52) et les aubes de stator (48) et dans lequel la longueur normalisée Lₙ est au moins quinze (15) fois supérieure à la hauteur normalisée Hₙ du canal annulaire.

7. Ensemble stator selon la revendication 6, dans lequel la hauteur radiale H_{C} du canal (56) est égale à 0,2 fois la hauteur H_{D} du passage d'écoulement du fluide moteur (H_{C} = 0,2 H_{D}).

8. Ensemble stator selon l'une quelconque des revendications précédentes, **caractérisé en ce qu'**un certain nombre d'entretoises (62) se prolongent radialement vers l'extérieur depuis la seconde paroi (52) jusqu'à la paroi extérieure (40), ce nombre étant inférieur au nombre d'aubes de stator (48) se prolongeant radialement depuis la paroi intérieure (44) jusqu'à la seconde paroi (52).

9. Ensemble stator selon la revendication 8, **caractérisé en ce qu'**il existe au moins quatre (4) entretoises (62).

10. Ensemble stator selon la revendication 8 ou 9, **caractérisé en ce qu'**au moins l'une des entretoises (62) possède un profil aérodynamique qui est identique à celui d'une aube de stator (48).

11. Ensemble stator selon la revendication 10, **caractérisé en ce que** la ou les entretoises (62) aérodynamiques sont en outre intégralement formées avec la ou les aubes de stator (48), de sorte que le profil aérodynamique de la ou des aubes de stator (48) se prolonge radialement vers l'extérieur jusqu'à la paroi extérieure (40).

12. Ensemble stator selon l'une quelconque des revendications 8 à 11, dans lequel le canal annulaire (56) possède en outre quatre (4) quadrants, au moins une entretoise (62) étant placée dans chaque quadrant du canal annulaire (56).

13. Ensemble stator selon l'une quelconque des revendications 10 à 15, **caractérisé en ce que** les entretoises (62) sont espacées sur la circonférence selon des distances égales dans le canal annulaire (56).

14. Procédé pour former un passage d'écoulement des gaz de fluide moteur pour une turbine à gaz possédant un axe de rotation Aᵣ et une paroi extérieure (40) s'étendant selon une forme cylindrique autour de l'axe de rotation Aᵣ délimitant vers l'extérieur le passage d'écoulement, incluant les étapes suivantes :
placement d'une batterie d'aubes de rotor dans la turbine à gaz, chaque aube de rotor (32) étant située en travers du passage d'écoulement et possédant une zone d'extrémité (38) ;
placement d'une batterie d'aubes de stator dans la turbine à gaz espacées axialement en aval de la batterie d'aubes de rotor, chaque aube de stator (48) étant située en travers du passage d'écoulement ;
placement d'une paroi intermédiaire (52) radialement vers l'intérieur depuis la paroi extérieure de sorte que la paroi intermédiaire et la paroi extérieure forment un canal annulaire (56) placé vers l'extérieur dans les vingt p. cent (20 %) radialement les plus à l'extérieur du passage d'écoulement du fluide moteur entre la paroi extérieure et la paroi intermédiaire ; **caractérisé par**
le placement d'une structure insonore (60) dans au moins une des parois délimitant le canal annulaire (56) pour absorber l'énergie sonore émise par la zone d'extrémité des aubes de rotor.

15. Procédé pour former un passage d'écoulement pour des gaz de fluide moteur selon la revendication 14, dans lequel l'étape de placement d'une paroi intermédiaire (52) radialement vers l'intérieur depuis la paroi extérieure (40) inclut l'étape de fixation intégrale de la paroi intermédiaire aux aubes de stator (48), et dans lequel l'étape de placement de la structure insonore (60) à côté du canal annulaire (56) inclut l'étape de fixation intégrale de la structure insonore à côté du canal annulaire à au moins une portion de la paroi extérieure et de la paroi intermédiaire pour absorber l'énergie sonore émise par la zone d'extrémité des aubes de rotor (32).

16. Procédé pour former un passage d'écoulement des gaz de fluide moteur selon la revendication 14 ou 15, dans lequel l'étape de placement d'une batterie d'aubes de stator (48) dans la turbine à gaz inclut l'étape où chaque aube de stator possède en outre un bord d'attaque, un bord de fuite, une longueur de corde bᵥ telle que mesurée dans la direction axiale et une longueur radiale S telle que mesurée au bord d'attaque, dans lequel l'étape de placement d'une paroi intermédiaire (52) radialement vers l'intérieur depuis la paroi extérieure (40) de sorte que la paroi intermédiaire et la paroi extérieure forment un canal (56) inclut l'étape où le canal possède une longueur axiale L_{C}, une hauteur radiale H_{C}, une longueur normalisée Lₙ, qui est égale à la longueur axiale du canal divisée par la corde axiale de l'aube du stator (Lₙ = L_{C}/bᵥ), une hauteur normalisée Hₙ du canal qui est égale à la hauteur radiale du canal divisée par la longueur radiale de l'aube du stator (Hₙ = H_{C}/S), et dans lequel la longueur normalisée du canal est au moins quinze (15) fois supérieure à la hauteur normalisée du canal en raison de la hauteur du canal qui offre une interaction accrue des ondes acoustiques avec la structure insonore (60).
